# EUROPEAN PATENT SPECIFICATION

(11) **EP 4 148 875 B1**
(45) Date of publication and mention of the grant of the patent: **18.06.2025**
(21) Application number: 22763502.6
(22) Date of filing: 16.02.2022
(51) Int. Cl.: H01M 10/658, H01M 10/6551, H01M 10/6556, H01M 10/613, H01M 50/204, H01M 50/211, H01M 10/647, H01M 10/659

(54) **BATTERY PACK AND DEVICE INCLUDING THE SAME**
BATTERIEPACK UND VORRICHTUNG DAMIT
BATTERIE ET DISPOSITIF LA COMPRENANT

(30) Priority: 05.03.2021 KR 20210029158
(43) Date of publication of application: 15.03.2023
(73) Proprietor: LG Energy Solution, Ltd., Seoul 07335 (KR)
(72) Inventor: JANG, Byung Do, Daejeon 34122 (KR); LEE, Hyoungsuk, Daejeon 34122 (KR); KIM, Donghyun, Daejeon 34122 (KR); SHIN, Juhwan, Daejeon 34122 (KR); CHUN, Yongho, Daejeon 34122 (KR)
(74) Representative: Plasseraud IP
(86) International application number: PCT/KR2022/002309
(87) International publication number: WO 2022/186518

(56) References cited:
- EP-B1- 3 382 774
- CN-U- 211 700 509
- JP-A- 2015 090 750
- JP-A- 2019 185 845
- KR-A- 20140 015 301
- KR-A- 20180 038 310
- KR-A- 20190 124 279
- KR-B1- 102 112 716

## Description

### [Technical Field]

The present invention relates to a battery pack and a device including the same, and more specifically, it relates to a battery pack that minimizes heat propagation between adjacent battery modules and a device including the same.

### [Background Art]

A rechargeable battery with high applicability with ease according to product groups and electrical characteristics such as high energy density are universally applied to electric vehicles or hybrid vehicles driven by electric drive sources, as well as portable devices and power storage devices. Such a rechargeable battery is attracting attention as a new energy source for enhancing environmentally-friendly and energy efficiency in that it does not generate any byproducts from the use of energy as well as the primary merit of dramatically reducing the use of fossil fuels.

A currently commercially available rechargeable battery includes a nickel cadmium battery, a nickel hydrogen battery, a nickel zinc battery, and a lithium rechargeable battery, and the lithium rechargeable battery is attracting attention for its merits of charging and discharging freely, a very low self-discharge rate, and high energy density because the memory effect hardly occurs compared to the nickel-based rechargeable battery.

In general, a lithium rechargeable battery can be classified into a cylindrical or prismatic rechargeable battery in which an electrode assembly is built into a metal can, and a pouch-type rechargeable battery in which an electrode assembly is built in a pouch of an aluminum laminate sheet, depending on the shape of the exterior material.

Recently, as the need for a large capacity rechargeable battery structure, including the use of rechargeable batteries as an energy storage source, increases, the demand for a battery pack with a medium-to-large module structure in which a plurality of rechargeable batteries are assembled in series or coupled in parallel battery modules is increasing. In such a battery module, a plurality of battery cells are coupled serially or in parallel to form a battery cell stack, thereby improving capacity and output. In addition, a plurality of battery modules may be mounted together with various control and protection systems such as a battery management system (BMS) and a cooling system to form a battery pack.

In particular, the battery pack has a structure in which a plurality of battery modules are combined, and thus in the case of overvoltage, overcurrent or overheating occurs in some battery modules, the safety and operation efficiency of the battery pack may be problematic. In particular, the capacity of the battery pack is gradually increasing to improve mileage, and as a result, the internal energy of the pack is also increased, and it is necessary to design a structure to satisfy the reinforced safety standards and to secure the safety of the vehicle and driver. For this purpose, particularly, the need for a structure that can prevent internal thermal runaway in advance and minimize the damage when it occurs is emerging.

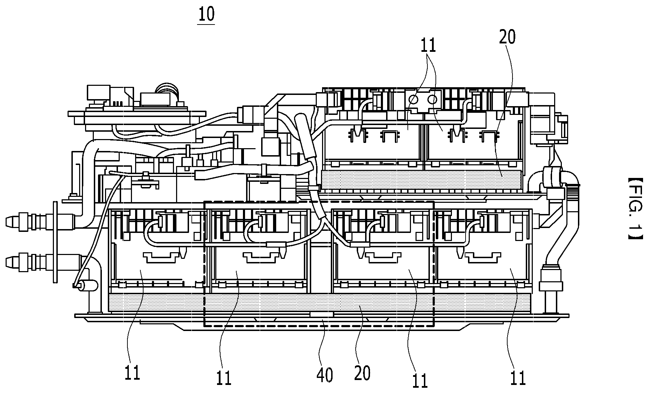

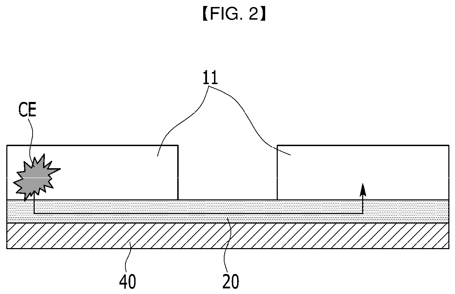

FIG. 1 is a cross-sectional view of a conventional battery pack. FIG. 2 schematically illustrates the dotted-line area in FIG. 1.

Referring to FIG. 1, in a conventional battery pack 10, a plurality of battery modules 11 are mounted on a pack housing 40, and the plurality of battery modules 11 are mounted on a cooling plate 20 positioned on the pack housing 40. More specifically, referring to FIG. 2, the battery modules 11 adjacent to each other are mounted on the pack housing 40, and may be positioned together on the cooling plate 20 attached to a lower portion of the pack housing 40.

Here, referring to FIG. 1 and FIG. 2, an abnormal phenomenon (CE) such as overvoltage, overcurrent, or overheating may occur in some of the battery modules 11 that are adjacent to each other. In this case, in the conventional battery pack 10, the heat of the battery module 11 in which the abnormal phenomenon (CE) has occurred may be transmitted to the cooling plate 20, and thus heat propagation may be generated to another battery module 11. In particular, in general, the cooling plate 20 is made of aluminum (Al) with high thermal conductivity for cooling performance, and thus the heat propagation may occur more quickly by the cooling plate 20. Due to this, there is a problem that thermal runaway may occur even for other battery modules 11 in which the abnormal phenomenon (CE) does not occur, and there is a problem that a chain thermal runaway occurs for other battery modules 11 positioned on the same cooling plate 40.

Accordingly, unlike the conventional battery pack 10, it is necessary to develop a battery pack and a device including the same that prevent thermal runaway from occurring by preventing heat propagation between adjacent battery modules 11 from occurring.

Examples of background art can be found in CN211700509U, EP3382774B1 and KR102112716B1.

### [Disclosure]

### [Technical Problem]

The problem to be solved by the present invention relates to a battery pack that minimizes heat propagation between adjacent battery modules and a device including the same.

The problem to be solved by the present invention is not limited to the above-mentioned problems, and problems not mentioned can be clearly understood by a person of an ordinary skill in the technical field to which the present invention belongs from this specification and the attached drawing.

### [Technical Solution]

A battery pack of the present invention includes: a pack frame in which a plurality of battery modules are mounted to be spaced apart from each other; and an insulating member positioned between a bottom surface of each battery module of the plurality of battery modules and a bottom surface of the pack frame, wherein each battery module of the plurality of battery modules includes a battery cell stack where a plurality of battery cells are stacked, a module frame that accommodates the battery cell stack, and a heat sink that is positioned on a bottom portion of the module frame, the bottom portion of the module frame forms an upper plate of the heat sink, and the bottom portion of the module frame is in contact with refrigerant supplied in the heat sink.

The insulating members positioned under each adjacent battery module among the plurality of battery modules may be spaced apart from each other .

The insulating member positioned under one battery module among the plurality of battery modules and the insulating member positioned under another battery module may be spaced apart from each other.

The insulating member may extend along a bottom surface of the battery module.

The insulating member may have a different size from the lower surface of the battery module, but may have a larger size than the lower surface of the battery module.

The insulating member may have the same size as the bottom surface of the battery module.

The insulating member may have a different size from the size of the heat sink, but may have a larger size than the heat sink.

The insulating member and the heat sink may have the same size.

The insulating member may be formed of an expanded polypropylene (EPP) foam.

The heat sink may be coupled with the bottom portion of the module frame, and includes a lower plate where a recess portion is formed, and a refrigerant may flow between the recess portion and the bottom portion of the module frame.

A protrude pattern may be formed in the recess portion.

A device according to another embodiment of the present invention includes the above-described battery pack.

### [Advantageous Effects]

According to the embodiments, in the battery module of the embodiment of the present invention includes the heat sink that is positioned on the bottom portion of the module frame, and the insulating member is positioned between the bottom surface of the battery module and the bottom surface of the pack frame such that heat propagation between adjacent battery modules can be minimized.

The effect of the present invention is not limited to the above-mentioned effects, and the effects not mentioned will be clearly understood by a person of an ordinary skill in the technical field to which the present invention belongs from this specification and the accompanying drawings.

### [Description of the Drawings]

FIG. 1 is a cross-sectional view of a conventional battery pack.
FIG. 2 schematically illustrates the dotted-line area in FIG. 1.
FIG. 3 is an exploded perspective view of a battery pack according to an embodiment of the present invention .
FIG. 4 is a top view of the battery pack of FIG. 3.
FIG. 5 is a perspective view of a battery module included in the battery pack of FIG. 3.
FIG. 6 is an exploded perspective view of the battery module of FIG. 5.
FIG. 7 is a perspective view of the bottom surface of the battery module of FIG. 5.
FIG. 8 schematically show a cross-section of FIG. 4, taken along the axis A-A'.

### [Mode for Invention]

Hereinafter, with reference to the accompanying drawing, various embodiments of the present invention will be described in detail such that a person of an ordinary skill can easily practice it in the technical field to which the present invention belongs. The present invention may be implemented in several different forms and is not limited to the embodiments described herein.

The drawings and description are to be regarded as illustrative in nature and not restrictive. Like reference numerals designate like elements throughout the specification.

In the drawings, size and thickness of each element are arbitrarily illustrated for convenience of description, and the present invention is not necessarily limited to as illustrated in the drawings. In the drawings, the thickness of layers, films, panels, regions, etc., are exaggerated for clarity. In addition, in the drawing, for convenience of explanation, the thickness of some layers and regions is exaggerated.

In addition, unless explicitly described to the contrary, the word "comprise", and variations such as "comprises" or "comprising", will be understood to imply the inclusion of stated elements but not the exclusion of any other elements.

Further, throughout the specification, the phrase "on a plane" means viewing a target portion from the top, and the phrase "on a cross-section" means viewing a cross-section formed by vertically cutting a target portion from the side.

Hereinafter, a battery pack according to an embodiment of the present invention will be described.

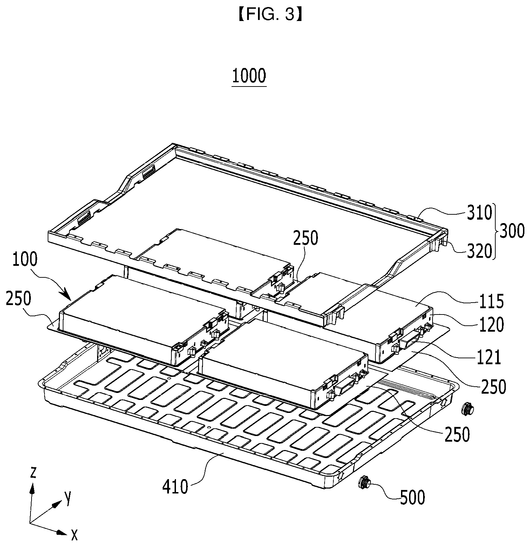

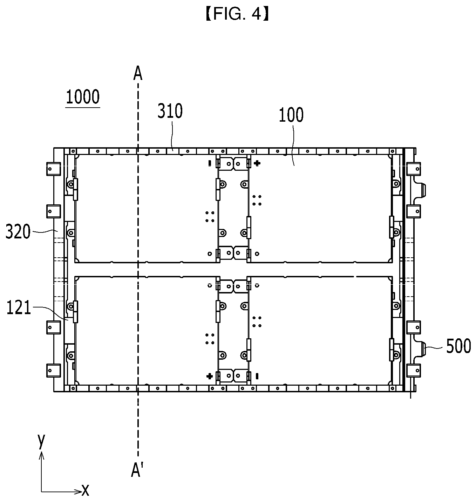

FIG. 3 is an exploded perspective view of a battery pack according to an embodiment of the present invention. FIG. 4 is a top view of the battery pack of FIG. 3.

A battery pack according to an embodiment of the present invention includes: a pack frame in which a plurality of battery modules are mounted to be spaced apart from each other; and an insulating member positioned between a bottom surface of the battery module and a bottom surface of the pack frame.

A pack frame 410 may be a lower housing on which a plurality of battery modules 100 are mounted, and may further include an upper cover (not shown) coupled to the pack frame 410 to cover an upper portion of the battery module 100. However, hereinafter, the upper cover (not shown) is omitted for convenience of explanation, but the battery pack 100 of the present embodiment can be described assuming that a generally-used upper cover (not shown) is coupled together therewith.

The pack frame 410 may be formed by including a bottom surface on which the plurality of battery modules 100 are disposed, and a side wall extending upward from an edge of the bottom surface. An upper cover (not shown) covering the upper portion of the battery module 100 is coupled to the pack frame 410 to protect the internal electric field. In this case, various control and protection systems such as a battery management system (BMS) and a cooling system may be mounted inside the pack frame 410 together with the battery module 100.

For example, the pack frame 410 may be made of a steel or aluminum material. More preferably, the pack frame 410 is made of a steel material having relatively low thermal conductivity compared to an aluminum material, and thus the level of heat energy transfer between adjacent battery modules 100 through the pack frame 410 can be reduced. However, the present invention is not limited thereto, and any material having sufficient rigidity is applicable to the pack frame 410.

The insulating member 250 may be positioned under the battery module 100. More specifically, in the plurality of battery modules 100, the insulating member 250 may be positioned under each battery module 100. That is, in the battery pack 1000 according to the present embodiment, the insulating member 250 may be disposed under each of the battery modules 100 mounted on the pack frame 410. That is, each battery module 100 may be individually or independently disposed on the insulating member 250.

In addition, the insulating members 250 respectively positioned under the adjacent battery modules 100 among the plurality of battery modules 100 may be spaced apart from each other. In other words, the insulating member 250 disposed under one battery module 100 may be spaced apart from the insulating member 250 disposed under the other adjacent battery module 100.

Accordingly, unlike the conventional battery pack 10 (refer to FIG. 1), a battery module 100 is positioned on each of insulating members 250 that are spaced apart from each other, and thus even though heat due to an abnormal phenomenon (CE) such as overvoltage, overcurrent, overheating, and the like of the insulating member 250 is transferred to the insulating member 250, the heat transferred to the insulating member 250 may not be directly transferred to other adjacent battery modules 100.

The insulating member 250 may be positioned between the bottom surface of the battery module 100 and the bottom surface of the pack frame 410. In other words, in the present embodiment, it may have a structure in which the pack frame 410, the insulating member 250, and the battery module 100 are stacked in that order.

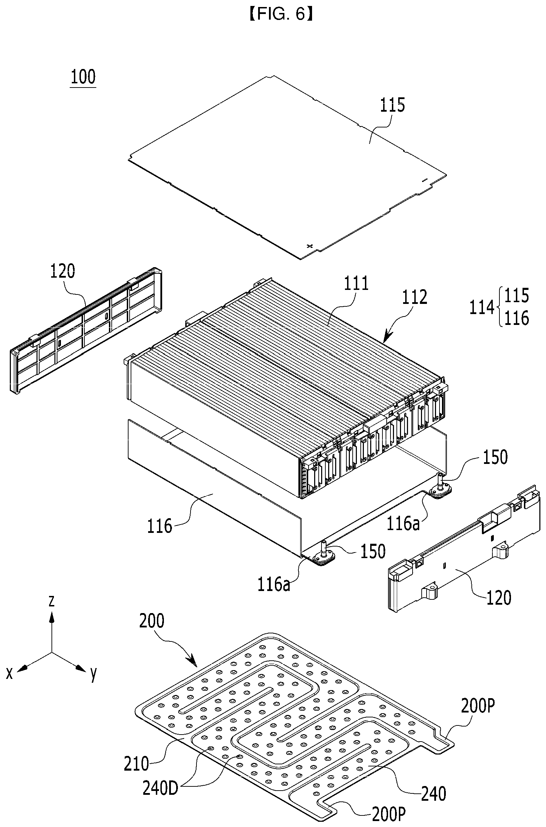

The insulating member 250 may extend along the bottom surface of the battery module 100. More specifically, the insulating member 250 may extend along the bottom surface of the heat sink 200 (refer to FIG. 6).

As an example, the insulating member 250 may have a different size from that of the bottom surface of the battery module 100, but may have a larger size than that of the bottom surface of the battery module 100. As another example, the insulating member 250 may have the same size as the bottom surface of the battery module 100.

As an example, the insulating member 250 may have a different size from the size of the heat sink (200, FIG. 6) positioned on the bottom surface of the battery module 100, but may have a larger size than the size of the heat sink 200 (refer to FIG. 6). As another example, the insulating member 250 may have the same size as the heat sink 200 (refer to FIG. 6).

Accordingly, the bottom surface of the battery module 100, that is, the contact area of the insulating member 250 for the heat sink 200 (FIG. 6) is sufficiently secured, and heat transferred from the heat sink 200 (FIG. 6) to the pack frame 410 can be effectively blocked.

For example, the insulating member 250 may be made of a foaming material such as expanded polypropylene (EPP) foam. However, the insulating member 250 is not limited thereto, and it can be any material as long as it has excellent thermal insulation properties.

Accordingly, with the above configuration, the insulating member 250 can prevent the bottom surface of the battery module 100, that is, the heat sink 200 (see FIG. 6) and the pack frame 410, from directly contacting each other. That is, it is possible to prevent the heat transferred from the battery module 100 from being directly transferred to the pack frame 410, and it is possible to prevent the heat generated outside the pack frame 410 from being transferred to the battery module 100.

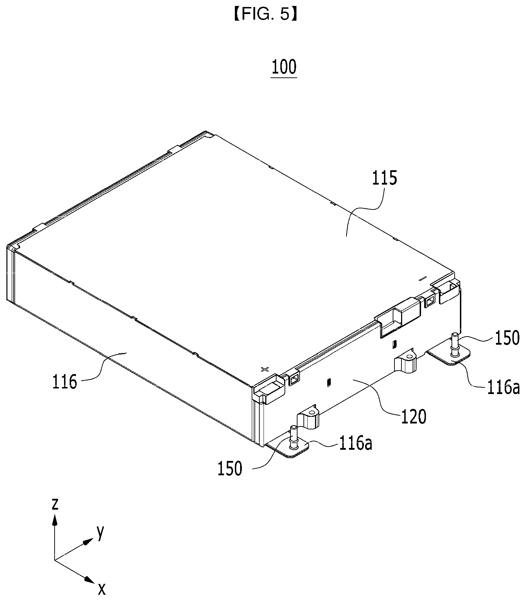

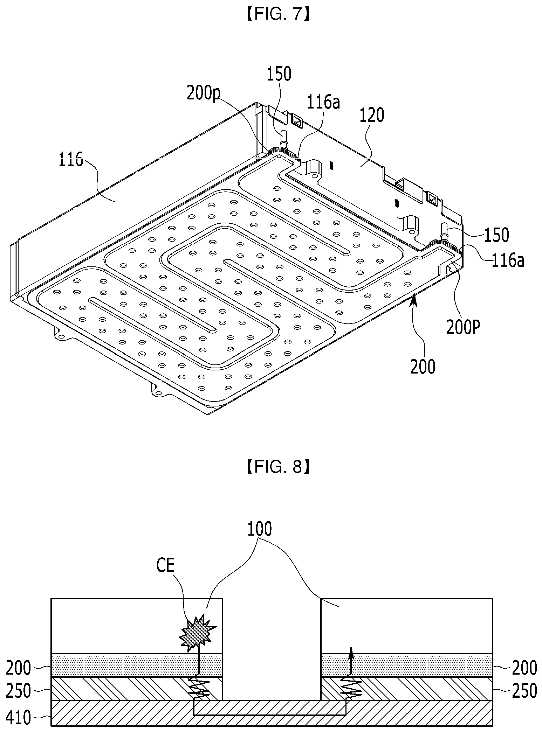

FIG. 5 is a perspective view of a battery module included in the battery pack of FIG. 3. FIG. 6 is an exploded perspective view of the battery module of FIG. 5. FIG. 7 is a perspective view of the bottom surface of the battery module of FIG. 5.

Referring to FIG. 5 and FIG. 6, the plurality of battery modules 100 of the battery pack 100 according to the present embodiment include a battery cell stack 112 where a plurality of battery cell 111 are stacked, a module frame 114 that receives the battery cell stack 112, and a heat sink 200 positioned on the bottom portion of the module frame 114.

The battery cell 111 is preferably a pouch-type battery cell. For example, the battery cell 111 may be manufactured by accommodating an electrode assembly in a pouch case of a laminate sheet including a resin layer and an inner layer, and then heat-sealing a sealing portion of the pouch case. The battery cell 111 may be formed in a rectangular sheet-type structure. Such a battery cell 111 may be provided in plural, and a plurality of battery cells 111 are stacked to be electrically connected to each other to form the battery cell stack 112.

The module frame 114 may include an upper cover 115 and a U-shaped frame 116. Here, the U-shaped frame 116 may include a bottom portion and two side portions extending upward from both ends of the bottom portion. **In** this case, the bottom portion may cover the lower surface of the battery cell stack 112, and the side portion may cover the side surface of the battery cell stack 112. The upper cover 115 and the U-shaped frame 116 may be joined by welding or the like in a state in which corresponding edge portions are in contact with each other to form a structure that covers the upper, lower, left, and right sides of the battery cell stack 112. For this, the upper cover 115 and the U-shaped frame 116 may be made of a metal material having predetermined strength. However, the module frame 114 is not limited thereto, and may be a mono frame in the form of a metal plate in which upper and lower surfaces and both sides are integrated.

The end plate 120 may be positioned on an open first side (x-axis direction) and a second side (the opposite direction of the x-axis) of the module frame 114 to cover the front and rear surfaces of the battery cell stack 112. Accordingly, the end plate 120 can physically protect the battery cell stack 112 and other electrical equipment from external impact.

Meanwhile, although not specifically illustrated, a bus bar frame on which a bus bar is mounted and an insulating cover for electrical insulation may be positioned between the battery cell stack 112 and the end plate 120.

Referring to FIG. 5 to FIG. 7, the module frame 114 according to the present embodiment may include a module frame protrude portion 116a that is formed by being extended from a bottom portion of the module frame 114, that is, a bottom portion of the U-shaped frame 116, to pass through the end plate 120. In this case, a refrigerant inflowing and discharged by a cooling port 150 connected to an upper surface of the module frame protrude portion 116a may be supplied to and discharged from the heat sink 200 through the module frame protrude portion 116a.

Specifically, the cooling port 150 according to the present embodiment includes a refrigerant injection port for supplying refrigerant to the heat sink 200 and a refrigerant discharge port for discharging refrigerant from the heat sink 200. The module frame protrude portion 116a may include a first module frame protrude portion and a second module frame protrude portion positioned to be spaced apart from each other on one side of the module frame 114, and the refrigerant injection port may be disposed on the first module frame protrude portion and the refrigerant discharge port may be disposed on the second module frame protrude portion.

Hereinafter, referring to FIG. 5 to FIG. 7, the heat sink according to the present embodiment will be described in detail.

A bottom portion of the module frame 114 may form an upper plate of the heat sink 200, and the bottom portion of the module frame 114 may contact the refrigerator supplied in the heat sink 200.

The heat sink 200 may be positioned under the module frame 114. More specifically, the heat sink 200 may include a lower plate 210 that forms the skeleton of the heat sink 200 and is directly coupled to the bottom portion of the module frame 114 by welding and the like, and a recess portion 240 that a path through which the refrigerant flows.

The heat sink 200 may include a heat sink protrude portion 200P protruding from one side of the heat sink 200 to a portion where the module frame protrude portion 116a is positioned. Here, the heat sink protrude portion 200P and the module frame protrude portion 116a may be directly coupled to each other by a method such as welding.

The recess portion 240 of the heat sink 200 corresponds to a portion in which the lower plate 210 is recessed downward. A cross-section of the recess portion 240, cut vertically in the x-z plane based on a direction in which the refrigerant flow path extends may be a U-shaped tube, and the bottom portion of the module frame 114 may be positioned on an open upper side of the U-shaped tube. As the heat sink 200 is in contact with the bottom portion of the module frame 114, a space between the recess portion 240 and the bottom portion of the module frame 114 becomes a region through which refrigerant flows, that is, a flow path for refrigerant. Accordingly, the bottom portion of the module frame 114 can be in direct contact with the refrigerant.

Although there is no particular limitation on a manufacturing method of the recess portion 240 of the heat sink 200, the U-shaped recess portion 240 with an open upper side may be formed by providing a structure in which a depression is formed with respect to the plate-shaped heat sink 200.

Such a recess portion 240 may be continued from one of the heat sink protrude portions 200P to another. The refrigerant supplied through the refrigerant injection port of the cooling port 150 passes between the module frame protrude portion 116a and the heat sink protrude portion 200P and then flows into the space between the recess portion 240 and the bottom portion of the module frame 114. Thereafter, the refrigerant moves along the recess portion 240, passes between the other module frame protrude portion 116a and the heat sink protrude portion 200P, and is discharged through the refrigerant discharge port of the cooling ports 150.

In addition, the bottom portion of the module frame 114 may be joined by welding to a portion of the lower plate 210, in which the recess portion 240 of the heat sink 200 is not formed. Through the integrated cooling structure of the bottom portion of the module frame 114 and the heat sink 200, the present embodiment not only improves the cooling performance described above, but also supports the load of the battery cell stack 112 accommodated in the module frame 114 and reinforces the rigidity of the battery module 100. In addition, the lower plate 210 and the bottom portion of the module frame 114 are sealed through welding and the like, and thus refrigerant can flow without leakage in the recess portion 240 formed inside the lower plate 210.

For effective cooling, as shown in FIG. 6 and FIG. 7, it is preferable that the recess portion 240 is formed over the entire area corresponding to the bottom portion of the module frame 114. To this end, the recess portion 240 may be bent at least once and then continued from one side to the other. In particular, the recess portion 240 is preferably bent several times in order to form the recess portion 240 over the entire area corresponding to the bottom portion of the module frame 114. As the refrigerant moves from the start point to the end point of the refrigerant flow path formed over the entire area corresponding to the bottom portion of the module frame 114, efficient cooling of the entire area of the battery cell stack 112 can be achieved. On the other hand, the refrigerant is a medium for cooling, and there is no particular limitation, but it may be cooling water.

Meanwhile, referring back to FIG. 5 and FIG. 6, a protrude pattern 240D may be formed in the recess portion 240 of the heat sink 200 according to the present embodiment.

In the case of a large-area battery module in which the number of stacked battery cells increases significantly compared to the prior art, such as the battery cell stack 112 according to the present embodiment, the refrigerant flow path may be formed wider, and thus the temperature deviation may be more severe. In particular, compared to the case in which approximately 12 to 24 battery cells are stacked in one battery module, the case in which approximately 32 to 48 battery cells are stacked in one battery module is included in a large-area battery module. In such a case, the protrude pattern 240D according to the present embodiment has the effect of substantially reducing the width of the cooling path, thereby minimizing the pressure drop and simultaneously reducing the temperature deviation between widths of the refrigerant path. Therefore, it is possible to implement a uniform cooling effect.

In the conventional battery pack shown in FIG. 1 and FIG. 2, battery modules 11 adjacent to each other are mounted on the pack housing 40 and positioned together on the cooling plate 20 attached to the lower portion of the pack housing 40, and thus the heat generated by some battery modules 11 is transferred to the cooling plate 20. Accordingly, there is a risk of heat propagation such that the heat generated by the thermal runaway in some battery modules 11 is transferred to the other battery modules 11 through the cooling plate 20.

On the other hand, in the battery pack 1000 according to the present embodiment, each battery module 100 implements a cooling integrated structure of the module frame 114 and the heat sink 200, and thus the heat transferred to the heat sink 200 in some battery module 100 can be prevented from being transmitted to a heat sink 200 of another battery module 100. Accordingly, although some of the heat caused by abnormal phenomena (CE) such as overvoltage, overcurrent, or overheating generated in some battery modules 100 is transmitted to the heat sink 200, the risk of heat propagation to the adjacent battery module 100 can be prevented.

In addition, the battery module 100 having the above-described integrated cooling structure is individually cooled, and thus the cooling efficiency of each battery module 100 may be further increased. In addition, through a structure in which the heat sink 200 is integrated with the bottom portion of the module frame 114, the space utilization rate on the battery module 100 and the battery pack 1000 on which the battery module 100 is mounted can be further improved. In addition, the height of the battery module 100 is reduced by removing the unnecessary cooling structure, and thus it possible to reduce costs and increase spatial utility. Furthermore, since the battery module 100 can be compactly disposed, the capacity or output of the battery pack 1000 including a plurality of the battery module 100 can be increased.

Referring to FIG. 3 and FIG. 4, according to another embodiment of the present invention, a venting gate 121 that can communicate with the inside of the battery module 100 and dissipate the flame or heat generated inside is included in either side of the end plate 120 positioned on the front and rear surfaces of the battery cell stack 112. In the battery pack 1000, the venting gate 121 is disposed to face the outside of the battery pack 1000, and preferably, as shown in FIG. 1, it can be disposed to face outside toward both ends of the first direction (x-axis direction) in the battery pack 1000.

In addition, it may further include a venting induction frame 300 disposed along edges of a plurality of battery module 100. More specifically, a plurality of battery modules 100 and the venting induction frame 300 may be mounted in the pack frame 410.

For example, at least one rupture portion 500 is formed on one side wall of the pack frame 410, and thus heat or flames generated thereinside can be discharged to the outside. In the present embodiment, although the two rupture portions 500 are formed on only one side of a pair of horizontal beams 320, it is not limited thereto and the rupture portion 500 is also provided on the other horizontal beam 320 or may be provided in the vertical beam 310, and the position and number of the rupture portions 500 can be appropriately selected as necessary.

In addition, the venting induction frame 300 may be disposed along the entire edges of the plurality of battery modules 100. The venting induction frame 300 is formed in the shape of a tube along each side of the battery pack 1000, and a pair of vertical beams 310 and a pair of horizontal beams 320 are extended along the first direction (x-axis direction) and the second direction (y-axis direction), respectively, and they may be formed to be able to communicate as a whole.

With the above configuration, a passage is formed to communicate with the whole inside the square-shaped venting induction frame 300 formed of the vertical beam 310 and the horizontal beam 320. The passage communicates with the venting gate 121 and the rupture portion 500 of the battery module 100, and thus, when a thermal runaway occurs from the battery module 100, heat and flame are induced to the outside, thereby minimizing the influence on the surrounding battery module. In this case, the flame contained in the generated high-pressure venting gas is combusted while passing through the passage inside the venting induction frame 300 and can be discharged to the outside in a safer state. In addition, this venting induction frame 300 serves as a support frame to stably support the battery module 100, not during thermal runaway, to improve the stability of the battery pack 1000.

Hereinafter, a heat propagation path when issues such as overvoltage, overcurrent, or overheating occur in some battery modules in the battery pack will be described in detail.

FIG. 8 schematically show a cross-section of FIG. 4, taken along the axis A-A'.

Referring to FIG. 4 and FIG. 8, in the battery pack 1000 of the present embodiment, a cell event CE may occur in some battery modules 100. Here, the cell event CE may mean that an abnormal phenomenon such as overvoltage, overcurrent, or overheating occurs in the battery module 100, and thus the battery module 100 generates a high temperature and gas.

Here, heat generated in the battery module 100 in which the cell event CE has occurred may be transmitted through a heat energy movement path passing through the heat sink 200 and insulation member 250 included in the battery module 100.

More specifically, the heat generated in the battery module 100 in which the cell event CE has occurred may first be transferred to the heat sink 200. As described above, due to the integrated cooling structure of the bottom portion of the module frame 114 and the heat sink 200, each battery module 100 includes a heat sink 200 individually, and thus the heat transmitted from the battery cell stack 112 to the heat sink 200 is not transmitted to another adjacent battery module 100.

Accordingly, according to the present embodiment, due to the integrated cooling structure of the battery module 100, even though the cell event CE occurs in some battery modules 100 among a plurality of battery modules 100, heat propagation to the adjacent battery module 100 can be prevented.

In addition, some of the heat transmitted to the heat sink 200 of the battery module 100 may be transmitted to the insulation member 250. Here, the insulating member 250 may block some of the heat transmitted from the heat sink 200 of the battery module 100 while preventing the heat generated from the battery module 100 from being directly transmitted to the pack frame 410. That is, although a cell event CE occurs in some battery modules 100 among a plurality of battery modules 100 and relatively much heat energy is generated, heat energy transmitted to the pack frame 410 through the insulating member 250 is minimized, and the temperature rise of the adjacent battery module 100 can also be minimized.

In addition, as described above, as the insulating member 250 is individually separated from each other in the lower portion of the battery module 100, the heat transmitted to the insulating member 250 of the battery module in which the cell event CE has occurred is not directly transmitted to another battery module 100. More specifically, some of the heat transmitted to the insulating member 250 of the battery module 100 in which the cell event CE has occurred may be transmitted to the pack frame 410, and some of the heat transmitted to the pack frame 410 may be transmitted to an insulating member 250 of another adjacent battery module 100.

Accordingly, although some of the heat generated in the battery module 100 in which the cell event CE has occurred is transmitted to the other adjacent battery module 100, the heat transmitted from the pack frame 410 can effectively blocked by the insulating member 250 of another adjacent battery module 100.

Accordingly, in the present embodiment having the above heat propagation path, although a cell event CE occurs in some battery modules 100 among a plurality of battery modules 100, it is possible to effectively prevent heat propagation to other adjacent battery modules 100, there preventing a series of thermal runaway phenomena.

The battery pack described above may be applied to various devices. Such a device may be applied to transportation means such as an electric bicycle, an electric vehicle, a hybrid vehicle, and the like, but the present invention is not limited thereto, and is applicable to various devices that can use a battery pack and this is also included within the scope of the present invention.

Although the preferred embodiments of the present invention have been described in detail above, the right range of the present invention is not limited thereto, and the scope of protection is defined solely by the appended claims.

### [Description of symbols]

- 100:: battery module
- 200:: heat sink
- 250:: insulating member
- 300:: venting induction frame
- 410:: pack frame

## Claims

1. A battery pack (1000) comprising:
a pack frame (410) in which a plurality of battery modules (100) are mounted to be spaced apart from each other; and
an insulating member (250) positioned between a bottom surface of each battery module (100) of the plurality of battery modules (100) and a bottom surface of the pack frame (410),
wherein each battery module (100) of the plurality of battery modules (100) comprises a battery cell stack (112) where a plurality of battery cells (111) are stacked, a module frame (114) that accommodates the battery cell stack (112), and a heat sink (200) that is positioned on a bottom portion of the module frame (114),
the bottom portion of the module frame (114) forms an upper plate of the heat sink (200), and
the bottom portion of the module frame (114) is in contact with refrigerant supplied in the heat sink (200).

2. The battery pack (1000) of claim 1, wherein
the insulating members (250) positioned under each adjacent battery module (100) among the plurality of battery modules are spaced apart from each other.

3. The battery pack (1000) of claim 2, wherein
the insulating member (250) positioned under one battery module (100) among the plurality of battery modules (100) and the insulating member (250) positioned under another battery module (100) are spaced apart from each other.

4. The battery pack (100) of claim 3, wherein
the insulating member (250) extends along a bottom surface of the battery module (100).

5. The battery pack (1000) of claim 4, wherein
the insulating member (250) has a different size from that of the bottom surface of the battery module (100), but has a larger size than that of the bottom surface of the battery module (100).

6. The battery pack (1000) of claim 4, wherein
the insulating member (250) has the same size as that of the bottom surface of the battery module (100).

7. The battery pack (1000) of claim 4, wherein
the insulating member (250) has a different size from the size of the heat sink (200), but has a larger size than the size of the heat sink (200).

8. The battery pack (1000) of claim 4, wherein
the insulating member (250) and the heat sink (200) have the same size.

9. The battery pack (1000) of claim 1, wherein
the insulating member (250) is made of an expanded polypropylene (EPP) foam.

10. The battery pack (1000) of claim 1, wherein
the heat sink (200) is coupled with the bottom portion of the module frame (114), and includes a lower plate (210) where a recess portion (240) is formed, and
a refrigerant flows between the recess portion (240) and the bottom portion of the module frame (114).

11. The battery pack (1000) of claim 10, wherein
a protrude pattern (240D) is formed in the recess portion (240).

12. A device comprising the battery pack (1000) of claim 1.

## Patentansprüche

1. Batterie-Pack (1000), umfassend:
einen Packrahmen (410), in welchem eine Vielzahl von Batteriemodulen (100) montiert sind, um voneinander beabstandet zu sein; und
ein Isolierelement (250), welches zwischen einer unteren Fläche von jedem Batteriemodul (100) der Vielzahl von Batteriemodulen (100) und einer unteren Fläche des Packrahmens (410) positioniert ist,
wobei jedes Batteriemodul (100) der Vielzahl von Batteriemodulen (100) einen Batteriezellenstapel (112), wo eine Vielzahl von Batteriezellen (111) gestapelt sind, einen Modulrahmen (114), welcher den Batteriezellenstapel (112) aufnimmt, und einen Kühlkörper (200), welcher auf einem unteren Abschnitt des Modulrahmens (114) positioniert ist, umfasst,
wobei der untere Abschnitt des Modulrahmens (114) eine obere Platte des Kühlkörpers (200) ausbildet, und
der untere Abschnitt des Modulrahmens (114) mit Kühlmittel in Kontakt steht, welches in dem Kühlkörper (200) bereitgestellt wird.

2. Batterie-Pack (1000) nach Anspruch 1, wobei
die Isolierelemente (250), welche unter jedem benachbarten Batteriemodul (100) aus der Vielzahl von Batteriemodulen angeordnet sind, voneinander beabstandet sind.

3. Batterie-Pack (1000) nach Anspruch 2, wobei
das Isolierelement (250), welches unter einem Batteriemodul (100) aus der Vielzahl von Batteriemodulen (100) positioniert ist, und das Isolierelement (250), welches unter einem anderen Batteriemodul (100) positioniert ist, voneinander beabstandet sind.

4. Batterie-Pack (100) nach Anspruch 3, wobei
das Isolierelement (250) sich entlang einer unteren Fläche des Batteriemoduls (100) erstreckt.

5. Batterie-Pack (1000) nach Anspruch 4, wobei
das Isolierelement (250) eine andere Größe als diejenige der unteren Fläche des Batteriemoduls (100) aufweist, aber eine größere Größe als diejenige der unteren Fläche des Batteriemoduls (100) aufweist.

6. Batterie-Pack (1000) nach Anspruch 4, wobei
das Isolierelement (250) die gleiche Größe wie diejenige der unteren Fläche des Batteriemoduls (100) aufweist.

7. Batterie-Pack (1000) nach Anspruch 4, wobei
das Isolierelement (250) eine andere Größe als die Größe des Kühlkörpers (200) aufweist, aber eine größere Größe als die Größe des Kühlkörpers (200) aufweist.

8. Batterie-Pack (1000) nach Anspruch 4, wobei
das Isolierelement (250) und der Kühlkörper (200) die gleiche Größe aufweisen.

9. Batterie-Pack (1000) nach Anspruch 1, wobei
das Isolierelement (250) aus einem expandierten Polypropylen (EPP)-Schaum hergestellt ist.

10. Batterie-Pack (1000) nach Anspruch 1, wobei
der Kühlkörper (200) mit dem unteren Abschnitt des Modulrahmens (114) gekoppelt ist und eine untere Platte (210) umfasst, wo ein Aussparungsabschnitt (240) ausgebildet ist, und
ein Kühlmittel zwischen dem Aussparungsabschnitt (240) und dem unteren Abschnitt des Modulrahmens (114) fließt.

11. Batterie-Pack (1000) nach Anspruch 10, wobei
ein hervorstehendes Muster (240D) in dem Aussparungsabschnitt (240) ausgebildet ist.

12. Vorrichtung umfassend das Batterie-Pack (1000) nach Anspruch 1.

## Revendications

1. Bloc-batterie (1000) comprenant :
un cadre de bloc (410) dans lequel une pluralité de modules de batterie (100) sont montés en étant espacés les uns des autres ; et
un organe isolant (250) positionné entre une surface de dessous de chaque module de batterie (100) de la pluralité de modules de batterie (100) et une surface de dessous du cadre de bloc (410),
dans lequel chaque module de batterie (100) de la pluralité de modules de batterie (100) comprend un empilement d'éléments de batterie (112) où une pluralité d'éléments de batterie (111) sont empilés, un cadre de module (114) qui accueille l'empilement d'éléments de batterie (112), et un dissipateur thermique (200) qui est positionné sur une partie de dessous du cadre de module (114),
la partie de dessous du cadre de module (114) forme une plaque supérieure du dissipateur thermique (200), et
la partie de dessous du cadre de module (114) est en contact avec un réfrigérant alimentant le dissipateur thermique (200).

2. Bloc-batterie (1000) selon la revendication 1, dans lequel
les organes isolants (250), positionnés au-dessous de chaque module de batterie (100) adjacent parmi la pluralité de modules de batterie, sont espacés les uns des autres.

3. Bloc-batterie (1000) selon la revendication 2, dans lequel
l'organe isolant (250), positionné au-dessous d'un module de batterie (100) parmi la pluralité de modules de batterie (100), et l'organe isolant (250), positionné au-dessous d'un autre module de batterie (100), sont espacés l'un de l'autre.

4. Bloc-batterie (100) selon la revendication 3, dans lequel
l'organe isolant (250) s'étend le long d'une surface de dessous du module de batterie (100).

5. Bloc-batterie (1000) selon la revendication 4, dans lequel
l'organe isolant (250) possède une taille différente de celle de la surface de dessous du module de batterie (100), mais possède une plus grande taille que celle de la surface de dessous du module de batterie (100).

6. Bloc-batterie (1000) selon la revendication 4, dans lequel
l'organe isolant (250) possède la même taille que celle de la surface de dessous du module de batterie (100).

7. Bloc-batterie (1000) selon la revendication 4, dans lequel
l'organe isolant (250) possède une taille différente de la taille du dissipateur thermique (200), mais possède une plus grande taille que la taille du dissipateur thermique (200).

8. Bloc-batterie (1000) selon la revendication 4, dans lequel
l'organe isolant (250) et le dissipateur thermique (200) possèdent la même taille.

9. Bloc-batterie (1000) selon la revendication 1, dans lequel
l'organe isolant (250) est constitué d'une mousse de polypropylène expansé (EPP).

10. Bloc-batterie (1000) selon la revendication 1, dans lequel
le dissipateur thermique (200) est couplé à la partie de dessous du cadre de module (114), et comporte une plaque inférieure (210) où une partie d'évidement (240) est formée, et
un réfrigérant s'écoule entre la partie d'évidement (240) et la partie de dessous du cadre de module (114).

11. Bloc-batterie (1000) selon la revendication 10, dans lequel
un motif saillant (240D) est formé dans la partie d'évidement (240).

12. Dispositif comprenant le bloc-batterie (1000) selon la revendication 1.
